# EUROPEAN PATENT APPLICATION

(11) **EP 4 116 757 A1**
(43) Date of publication of application: **11.01.2023**
(21) Application number: 21781653.7
(22) Date of filing: 19.03.2021
(51) Int. Cl.: G02B 27/01

(54) **AUGMENTED REALITY DEVICE**

(30) Priority: 28.03.2020 CN 202010233011
(71) Applicant: Huawei Technologies Co., Ltd., Shenzhen, Guangdong 518129, (CN)
(72) Inventor: ZHANG, Pengpeng, Shenzhen, Guangdong 518129 (CN); ZHU, Shuaishuai, Shenzhen, Guangdong 518129 (CN); ZHENG, Xiaowen, Shenzhen, Guangdong 518129 (CN)
(74) Representative: Maiwald GmbH
(86) International application number: PCT/CN2021/081824
(87) International publication number: WO 2021/197100

(57) **Abstract**

An augmented reality device (100) includes a frame (10), a combiner (31), a laser projector (32), and a filter (33). The combiner (31) is mounted on the frame (10), and the combiner (31) includes an inner surface (312) and an outer surface (313) that are opposite to each other. The laser projector (32) is mounted on the frame (10), and the laser projector (32) is configured to emit a laser beam (L₀). The filter (33) is mounted on the outer surface (313) of the combiner (31), and a blocking band of the filter (33) includes a band of the laser beam (L₀). After the laser beam (L₀) enters the combiner (31), a part of the laser beam (L₀) is emitted from the inner surface (312) of the combiner (31), a part of the laser beam (L₀) is emitted from the outer surface (313) of the combiner (31), and the filter (33) blocks the laser beam emitted from the outer surface of the combiner (31). After a part of ambient light (L_{c}) whose wavelength is outside the blocking band passes through the filter (33), the part of ambient light (L_{c}) enters the combiner (31) through the outer surface (313) of the combiner (31), and is emitted from the inner surface (312) of the combiner (31). The augmented reality device (100) may reduce a possibility that the laser beam (L₀) that is projected by the laser projector (32) is emitted outward from the augmented reality device (100), prevent light that carries digital information from being leaked, and improve privacy of a user.

## Description

This application claims priority to Chinese Patent Application No. 202010233011.X, filed with the China National Intellectual Property Administration on March 28, 2020 and entitled "AUGMENTED REALITY DEVICE", which is incorporated herein by reference in its entirety.

### TECHNICAL FIELD

This application relates to the display field in which virtuality and reality are combined, and in particular, to an augmented reality device.

### BACKGROUND

A principle of an augmented reality (augmented reality, AR) technology is as follows: A computer-controlled image projector is used to project, into the human eye to form a virtual scene, display light that carries digital content, and the virtual scene is superposed with an external real scene that can be directly seen by the human eye, so that the human eye views image information obtained by combining the virtual scene and the external real scene.

In a conventional augmented reality device, because a part of display light projected by an image projector is always emitted from the augmented reality device, display light that carries digital information is leaked. Consequently, privacy of a user is leaked, and privacy of the user is reduced.

### SUMMARY

This application provides an augmented reality device, to reduce a possibility that display light is emitted from the augmented reality device, prevent display light that carries digital information from being leaked, and improve privacy of a user.

The augmented reality device in this application includes a frame, a combiner, a laser projector, and a filter. The combiner is mounted on the frame, and the combiner includes an inner surface and an outer surface that are opposite to each other. The laser projector is mounted on the frame, and the laser projector is configured to emit a laser beam. The laser beam is display light that carries digital content. The filter is mounted on the outer surface of the combiner, and a blocking band of the filter includes a band of the laser beam.

After the laser beam enters the combiner, a part of the laser beam is emitted from the inner surface of the combiner, a part of the laser beam is emitted from the outer surface of the combiner, and the filter blocks the laser beam emitted from the outer surface of the combiner, to prevent the laser beam emitted from the outer surface of the combiner from passing through the filter and being emitted into an external environment, and prevent the laser beam that carries the digital content from being leaked. This may improve privacy of a user and sociality of the augmented reality device, and may further prevent the leaked display light from forming a small display window on a surface of the augmented reality device, to improve appearance refinement existing when the user uses the augmented reality device.

After a part of ambient light whose wavelength is outside the blocking band passes through the filter, the part of ambient light enters the combiner through the outer surface of the combiner, and is emitted from the inner surface of the combiner, so that the user can view an external real scene through the combiner and the filter, to ensure that the augmented reality device has a specific transmittance.

The inner surface of the combiner is a surface of the combiner that faces the user when the augmented reality device is worn on the head of the user. In other words, the inner surface of the combiner is a surface of the combiner that faces the human eye. Similarly, the outer surface of the combiner is a surface of the combiner that faces away from the user when the augmented reality device is worn on the head of the user. In other words, the outer surface of the combiner is a surface of the combiner that faces away from the human eye. In other words, the outer surface of the combiner is a surface of the combiner that faces the outside.

In an implementation, the outer surface of the combiner includes a light exit area, the laser beam emitted from the outer surface of the combiner is emitted from the light exit area of the outer surface of the combiner, and the filter covers the light exit area of the outer surface of the combiner, so that the laser beam emitted from the outer surface of the combiner is not emitted into the external environment, to prevent the laser beam that carries the digital content from being leaked.

In another implementation, the filter covers the outer surface of the combiner, to ensure appearance integrity and consistency of the augmented reality device, and improve appearance refinement of the augmented reality device. In addition, compared with a manner in which the filter covers only a light exit area of the outer surface of the combiner, the filter covers the outer surface of the combiner, so that a difficulty in a process of assembling the filter is reduced, and there is no need to perform additional processing on the filter, to reduce a difficulty in processing the filter, and reduce production costs of the filter.

In an implementation, the laser projector is configured to emit a red laser beam, a green laser beam, and a blue laser beam to implement color display by blending the three colors of laser beams. The blocking band of the filter includes bands of the red laser beam, the green laser beam, and the blue laser beam, to block light whose wavelength is in the bands of the red laser beam, the green laser beam, and the blue laser beam and that is in the laser beam emitted from the outer surface of the combiner.

In an implementation, the blocking band includes a first band, a second band, and a third band, every two of the first band, the second band, and the third band are spaced apart, the first band includes the band of the red laser beam, the second band includes the band of the green laser beam, and the third band includes the band of the blue laser beam.

Because the first band, the second band, and the third band are spaced apart, light whose wavelength is between the first band and the second band and light whose wavelength is between the second band and the third band can still pass through the filter to be normally propagated, to reduce an impact caused by the filter on light whose wavelength is among the bands of the red laser beam, the green laser beam, and the blue laser beam in the laser beam, and reduce a color cast existing when the user views the external real scene.

In an implementation, a center wavelength of the first band is the same as a peak wavelength of the red laser beam, a center wavelength of the second band is the same as a peak wavelength of the green laser beam, and a center wavelength of the third band is the same as a peak wavelength of the blue laser beam, so that the filter can well block light whose wavelength is in the peak wavelengths of the red laser beam, the green laser beam, and the blue laser beam and that is in the laser beam emitted from the outer surface of the combiner.

In an implementation, bandwidths of the red laser beam, the green laser beam, and the blue laser beam are between 5 nm and 8 nm, and bandwidths of the first band, the second band, and the third band are between 15 nm and 20 nm, to ensure that the filter can totally block light whose wavelength is in the bands of the red laser beam, the green laser beam, and the blue laser beam and that is in the laser beam emitted from the outer surface of the combiner.

In an implementation, the filter includes a red filter coating, a green filter coating, and a blue filter coating that are stacked, the red filter coating is configured to filter the red laser beam, the green filter coating is configured to filter the green laser beam, and the blue filter coating is configured to filter the blue laser beam, to filter the red laser beam, the green laser beam, and the blue laser beam.

In an implementation, the augmented reality device includes two augmented reality components, the two augmented reality components are spaced apart on the frame, each augmented reality component includes a combiner, a laser projector, and a filter, and the combiners of the two augmented reality components are disposed side by side.

In the augmented reality device shown in this implementation, one augmented reality component corresponds to the left eye of the user, and the other augmented reality component corresponds to the right eye of the user. The two augmented reality components have a same structure, that is, when ensuring the transmittance of the augmented reality device, the two augmented reality components both prevent the laser beam that carries the digital content from being leaked.

In an implementation, the frame includes a rim and a leg connected to the rim, the combiners of the two augmented reality components are spaced apart on the rim, and the laser projector is accommodated inside the rim or the leg.

In an implementation, the augmented reality device further includes a zoom device, and the zoom device is mounted on the inner surface of the combiner. In other words, the zoom device is located on a side of the combiner that is close to the human eye, to correct eyesight of the user. When the user has an eyesight problem such as nearsightedness, farsightedness, or astigmatism, the zoom device may correct a refractive error of the user when the user views a virtual scene or the external real scene, to improve clarity existing when the user views the virtual scene or the external real scene, and improve user experience of using the augmented reality device.

In an implementation, the combiner includes a diffractive optical waveguide, an in-coupling grating, and an out-coupling grating, the in-coupling grating and the out-coupling grating are blazed gratings, the in-coupling grating and the out-coupling grating are spaced apart on an outer surface of the diffractive optical waveguide, and the in-coupling grating is opposite to the laser projector.

In another implementation, the in-coupling grating and the out-coupling grating are transmissive gratings, and the in-coupling grating and the out-coupling grating are mounted on an inner surface of the diffractive optical waveguide.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of a structure of an augmented reality device according to an embodiment of this application;
FIG. 2 is a schematic diagram of a structure of wearing the augmented reality device shown in FIG. 1 on the head of a user;
FIG. 3 is a schematic diagram of a simplified structure of the structure shown in FIG. 2;
FIG. 4 is a schematic diagram of an enlarged structure of an area A in the structure shown in FIG. 3 in an embodiment;
FIG. 5 is a curve chart of a laser spectrum emitted by a laser projector in an augmented reality device shown in FIG. 4;
FIG. 6 is a curve chart of a transmittance curve of a filter and a laser spectrum projected by a laser projector in an augmented reality device shown in FIG. 4; and
FIG. 7 is a schematic diagram of an enlarged structure of an area A in the structure shown in FIG. 3 in another embodiment.

### DESCRIPTION OF EMBODIMENTS

The following describes embodiments of this application with reference to the accompanying drawings in embodiments of this application.

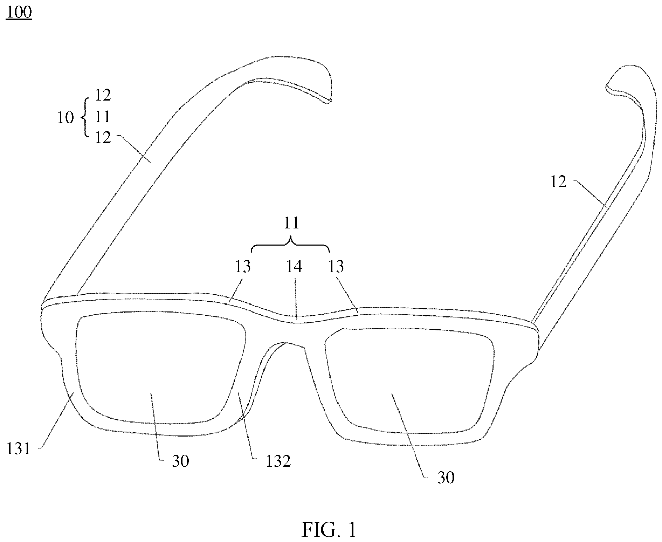

FIG. 1 is a schematic diagram of a structure of an augmented reality device 100 according to an embodiment of this application.

The augmented reality device 100 may be an electronic product that combines digital content and a reality scene, for example, AR glasses, an AR helmet, mixed reality (mixrtual reality, MR) glasses, an MR helmet, or the like. That the augmented reality device 100 in the embodiment shown in FIG. 1 is AR glasses is used as an example for description.

In this embodiment, the augmented reality device 100 includes a frame 10 and an augmented reality component 30 mounted on the frame 10. There are two augmented reality components 30, and the two augmented reality components 30 are spaced apart on the frame 10.

The frame 10 includes a rim 11 and a leg 12 connected to the rim 11. There are two legs 12, and the two legs 12 are connected to two opposite ends of the rim 11. It should be noted that, in another embodiment, the frame 10 may include a rim 11 and a fixing strap connected to the rim 11. This is not specifically limited in this application.

The rim 11 includes two borders 13 and a bridge 14 connected between the two borders 13. Each border 13 includes a first border 131 away from the bridge 14 and a second border 132 opposite to the first border 131. An accommodation cavity is disposed inside the first border 131, and the accommodation cavity of the first border 131 is configured to accommodate an electronic element of the augmented reality device 100. The bridge 14 and the two borders 13 are integrally formed, to simplify a process of forming the rim 11, and increase overall strength of the rim 11. A material of the rim 11 includes but is not limited to metal, plastic, resin, or a natural material. It should be understood that the rim 11 is not limited to a full-rim frame shown in FIG. 1, or may be a half-rim frame or rimless frame.

The two legs 12 are rotatably connected to the two opposite ends of the rim 11. Specifically, the two legs 12 are rotatably connected to the two borders 13 of the rim 11 respectively. The two legs 12 are respectively connected to the first borders 131 of the two borders 13. When the augmented reality device 100 is in an unfolded state (as shown in FIG. 1), the two legs 12 rotate relative to the rim 11 to be opposite to each other. In this case, the two legs 12 of the augmented reality device 100 may be respectively mounted on the two ears of a user, and the bridge 14 is mounted on the nose of the user, so that the augmented reality device 100 is worn on the head of the user. When the augmented reality device 100 is in a folded state, the two legs 12 rotate relative to the rim 11 to at least partially overlap each other and be accommodated inside the rim 11. In this case, the augmented reality device 100 may be stored. It may be understood that, in another embodiment, the two legs 12 may be fixedly connected to the first borders 131 of the two borders 13 respectively, or the two legs 12 and the rim 11 may be integrally formed, that is, the augmented reality device 100 is always in an unfolded state. This is not specifically limited in this application. It should be noted that an accommodation cavity may be also disposed inside the leg 12, and the accommodation cavity of the leg 12 may also accommodate the electronic element of the augmented reality device 100.

It should be noted that direction words such as "inside" and "outside" that are used when the augmented reality device 100 is mentioned in this application are mainly described based on a direction existing when the augmented reality device 100 is worn by the user on the head. When the augmented reality device 100 is worn by the user, a side close to the head of the user is the inside, and a side away from the head of the user is the outside. This imposes no limitation on a direction of the augmented reality device 100 in another scenario.

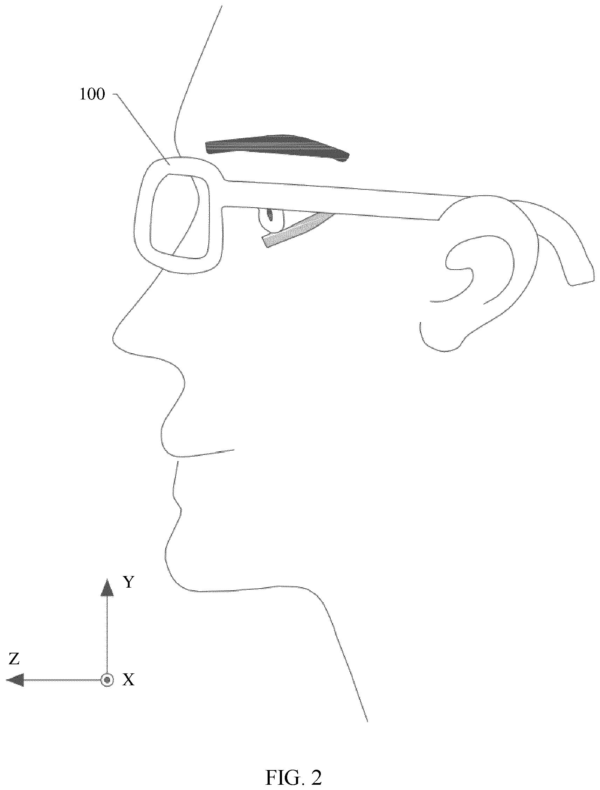

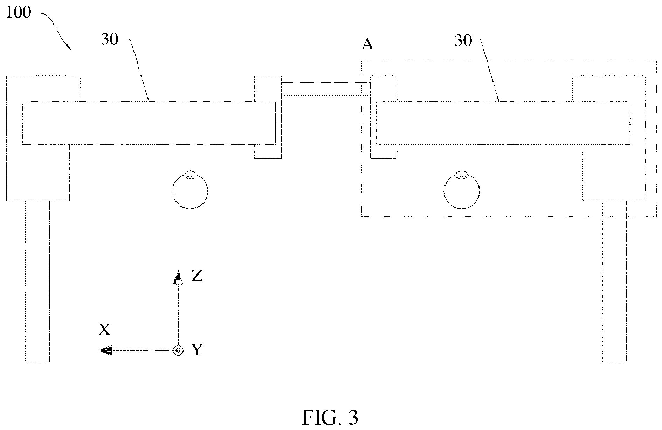

FIG. 2 is a schematic diagram of a structure of wearing the augmented reality device 100 shown in FIG. 1 on the head of a user. FIG. 3 is a schematic diagram of a simplified structure of the structure shown in FIG. 2.

Next, for ease of description, as shown in FIG. 2 and FIG. 3, a length direction of the augmented reality device 100 is defined as an X-axis direction, a width direction of the augmented reality device 100 is defined as a Y-axis direction, a thickness direction of the augmented reality device 100 is defined as a Z-axis direction, and every two of the X-direction, the Y-direction, and the Z-direction are perpendicular to each other. The X-axis direction is a direction in which one border 13 of the rim 11 faces the other border 13, and the Z-axis direction is a direction in which the rim 11 faces the leg 12.

In this embodiment, the two augmented reality components 30 have a same structure. Specifically, the two augmented reality components 30 are respectively mounted on the two borders 13 of the rim 11. When the augmented reality device 100 is worn on the head of the user, one augmented reality component 30 corresponds to the left eye of the user, and the other augmented reality component 30 corresponds to the right eye of the user. In this case, the eyes of the user may view a virtual scene and a real scene by using the two augmented reality components 30. It should be noted that, in another embodiment, the two augmented reality components 30 may have different structures. This is not specifically limited in this application.

Next, for ease of understanding, the augmented reality component 30 corresponding to the right eye of the user is used as an example to specifically describe a structure of the augmented reality component 30.

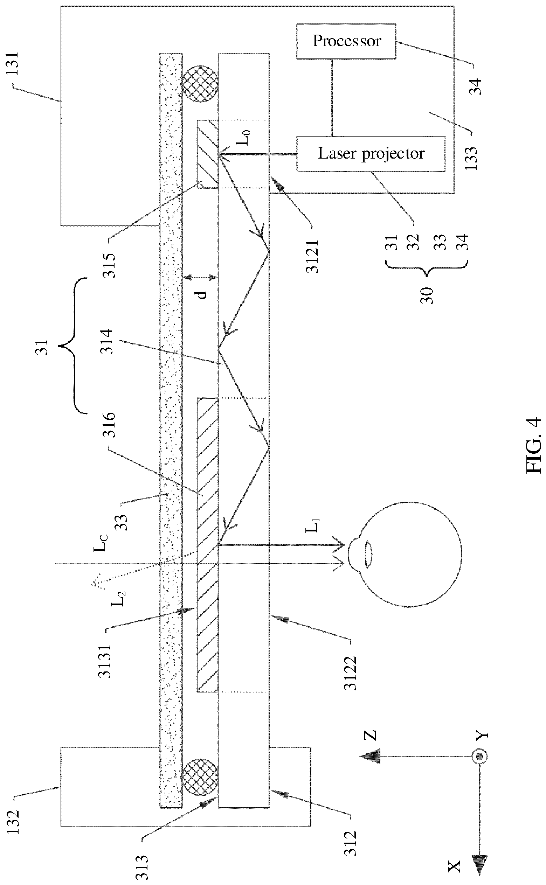

Referring to FIG. 3 and FIG. 4, FIG. 4 is a schematic diagram of an enlarged structure of an area A in the structure shown in FIG. 3 in an embodiment.

The augmented reality component 30 includes a combiner (combiner) 31, a laser projector 32, a filter 33, and a processor 34. Specifically, the combiner 31 is mounted on the frame 10. The combiner 31 includes an inner surface 312 and an outer surface 313 that are opposite to each other. The laser projector 32 is mounted on the frame 10, and is configured to emit a laser beam L₀. The laser beam L₀ is display light that carries digital content and that is projected by the laser projector 32. The filter 33 is mounted on the outer surface 313 of the combiner 31, and a blocking band of the filter 33 includes a band of the laser beam L₀. The processor 34 is coupled to the laser projector 32, to control the laser projector 32 to be turned on and turned off.

It should be noted that, in another embodiment, the two augmented reality components 30 may include only one processor 34, and the processor 34 is coupled to laser projectors 32 of the two augmented reality components 30, to control the two laser projectors 32 to be turned on and turned off. This is not specifically limited in this application.

The combiner 31 is mounted on the rim 11 of the frame 10. In this embodiment, the combiners 31 of the two augmented reality components 30 are disposed side by side in the X-axis direction. Specifically, the combiners 31 of the two augmented reality components 30 are spaced apart on the rim 11. The combiner 31 is mounted on the border 13 of the rim 11. The inner surface 312 of the combiner 31 is a surface of the combiner 31 that faces the inside of the rim 11. In other words, the outer surface 313 of the combiner 31 is a surface of the combiner 31 that faces the outside of the rim 11. In this embodiment, the combiner 31 is a device that combines the digital content and the real scene by using a diffractive optical waveguide technology. It should be noted that, in another embodiment, the combiner 31 may be a device that uses a technology such as a bird bath (bird bath), a freeform surface, or a reflection array optical waveguide.

Specifically, the combiner 31 includes a diffractive optical waveguide 314, an in-coupling grating 315, and an out-coupling grating 316. The diffractive optical waveguide 314 is mounted on the border 13. One end of the diffractive optical waveguide 314 is mounted on the first border 131 of the border 13, and is accommodated in an accommodation cavity 133 of the first border 131. The other end of the diffractive optical waveguide 314 is mounted on the second border 132 of the border 13. The diffractive optical waveguide 314 includes an inner surface and an outer surface that are opposite to each other. The inner surface of the diffractive optical waveguide 314 is a surface of the diffractive optical waveguide 314 that faces the inside of the rim 11. In other words, the outer surface of the diffractive optical waveguide 314 is a surface of the diffractive optical waveguide 314 that faces the outside of the rim 11.

In this embodiment, both the in-coupling grating 315 and the out-coupling grating 316 are blazed gratings. Specifically, the in-coupling 315 is mounted on the outer surface of the diffractive optical waveguide 314, and is located in the accommodation cavity 133 of the first border 131. The out-coupling grating 316 is mounted on the outer surface of the diffractive optical waveguide 314, is spaced apart from the in-coupling grating 315, and is located between the first border 131 and the second border 132. It should be understood that the in-coupling grating 315 and the out-coupling grating 316 may be transmissive gratings. In this case, the in-coupling grating 315 and the out-coupling grating 316 are mounted on the inner surface of the diffractive optical waveguide 314. In addition, the in-coupling grating 315 and the out-coupling grating 316 may be holographic gratings, slanted gratings, polarization gratings, liquid crystal gratings, holographic optical elements, or diffractive optical elements. This is not specifically limited in this application.

It should be understood that a grating is an optical device formed by a large quantity of parallel slits with an equal width and an equal distance. When light is incident on a surface of the grating at an angle, the grating can periodically adjust an amplitude or a phase of the light in space, so that the light is emitted from the surface of the grating in a direction different from the angle of incidence. Descriptions of the grating below are understood in a same manner.

In this embodiment, the inner surface of the diffractive optical waveguide 314 is the inner surface 312 of the combiner 31. The inner surface 312 of the combiner 31 includes a light entrance area 3121 and a light exit area 3122. The light entrance area 3121 of the inner surface 312 is located in the accommodation cavity 133 of the first border 131. Specifically, the light entrance area 3121 of the inner surface 312 is an area covered by a projection of the in-coupling grating 315 on the inner surface 312. In other words, an area that is on the inner surface 312 of the combiner 31 and that directly faces the in-coupling grating 315 is the light entrance area 3121 of the inner surface 312.

The light exit area 3122 of the inner surface 312 is spaced apart from the light entrance area 3121, and is located between the first border 131 and the second border 132. Specifically, the light exit area 3122 of the inner surface 312 is an area covered by a projection of the out-coupling grating 315 on the inner surface 312. In other words, an area that is on the inner surface 312 and that directly faces the out-coupling grating 315 is the light exit area 3122 of the inner surface 3123.

The outer surface 313 of the combiner 31 includes a surface of the in-coupling grating 315 that faces away from the diffractive optical waveguide 314, a surface of the out-coupling grating 316 that faces away from the diffractive optical waveguide 314, and an area that is on the outer surface of the diffractive optical waveguide 314 and that is not covered by the in-coupling grating 315 and the out-coupling grating 316. In other words, the outer surface 313 of the combiner 31 includes an outer surface of the in-coupling grating 315, an outer surface of the out-coupling grating 316, and the area that is on the outer surface of the diffractive optical waveguide 314 and that is not covered by the in-coupling grating 315 and the out-coupling grating 316. The outer surface 313 of the combiner 31 includes a light exit area 3131. Specifically, the light exit area 3131 of the outer surface 313 is a surface of the out-coupling grating 316 that faces away from the diffractive optical waveguide 314, namely, the outer surface of the out-coupling grating 316.

In this embodiment, the laser projector 32 is located in the accommodation cavity 133 of the first border 131, and is opposite to the combiner 31. Specifically, the laser projector 32 is located on a side of the diffractive optical waveguide 314 that faces away from the in-coupling grating 315. In other words, the laser projector 32 and the in-coupling grating 315 are respectively located on two opposite sides of the diffractive optical waveguide 314. The laser projector 32 is an image projector that projects a virtual scene by using a laser beam. It may be understood that, when the in-coupling grating 315 is a transmissive grating, the image projector 32 and the in-coupling grating 315 are located on a same side of the diffractive optical waveguide 314. It should be noted that, in another embodiment, the laser projector 32 may be located in the accommodation cavity of the leg 12 (namely, the inside of the mirror leg 12); or the laser projector 32 may be partially located in the accommodation cavity 133 of the first border 131, and partially located in the accommodation cavity of the leg 12; or the laser projector 32 may not be located in the accommodation cavity 133 of the first border 131 or the accommodation cavity of the leg 12, but is directly exposed to a surface of the border 13, provided that a line of sight of the user is not blocked when the augmented reality device 100 is used.

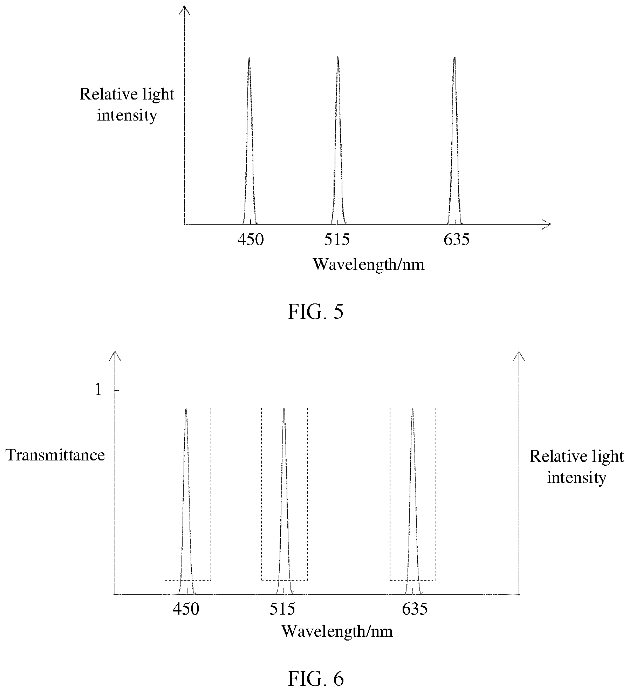

FIG. 5 is a curve chart of a laser spectrum emitted by a laser projector 32 in an augmented reality device 100 shown in FIG. 4.

In this embodiment, the laser projector 32 directly faces the light entrance area 3121 of the inner surface 312, and is configured to project, to the combiner 31, a laser beam L₀ that carries digital content. Specifically, the laser projector 32 includes an optical module, and the optical module includes at least one laser. The optical module of the laser projector 32 includes a red (red, R) laser, a green (green, G) laser, and a blue (blue, B) laser. The laser beam L₀ projected by the laser projector 32 includes three types of laser beams, and the three types of laser beams are respectively a red laser beam, a green laser beam, and a blue laser beam. A peak wavelength of the red laser beam is between 630 nm and 640 nm, a peak wavelength of the green laser beam is between 510 nm and 520 nm, a peak wavelength of the blue laser beam is between 445 nm and 455 nm, and band widths of the red laser beam, the green laser beam, and the blue laser beam are between 5 nm and 8 nm. It should be understood that a laser beam is a light source with a narrow bandwidth and high energy, and full widths at half maximum of the red laser beam, the green laser beam, and the blue laser beam are about 1 nm to 2 nm.

When the processor 34 turns on the laser projector 32, that is, when the laser projector 32 is in a turn-on state, the laser projector 32 projects a laser beam L₀ to the combiner 31, a part of the laser beam L₀ is emitted from the inner surface 312 of the combiner 31, and a part of the laser beam L₀ is emitted from the outer surface 313 of the combiner 31. The laser projector 32 projects a laser beam L₀ that carries digital content, and the laser beam L₀ enters the combiner 31 through the light entrance area 3121 of the inner surface 312, and is emitted from the light exit area 3122 of the inner surface 312 and the light exit area 3131 of the outer surface 313.

Specifically, the laser beam L₀ is vertically emitted to the inner surface of the diffractive optical waveguide 314 (namely, the inner surface 312 of the combiner 31), is vertically emitted to the in-coupling grating 315 through the light entrance area 3121 of the inner surface 312, and is coupled into the diffractive optical waveguide 314 by using the in-coupling grating 315. The in-coupling grating 315 has adjusted a propagation direction of the laser beam L₀ to a state in which a total internal reflection condition is met. The laser beam L₀ is totally reflected at least once in the diffractive optical waveguide 314, and is propagated in a direction of the out-coupling grating 316, until the laser beam reaches the out-coupling grating 316 and is diffracted. After a part of the laser beam L₀ is diffracted, the part of the laser beam L₀ is propagated from the light exit area 3122 of the inner surface 312 to the inside of the combiner 31, that is, is propagated in a direction of the human eye. In the figure, the part of light is marked as incident light L₁ in the eye, and the incident light L₁ may enter the human eye for imaging, so that the user can view the virtual scene that carries the digital content. It may be understood that, because the laser beam L₀ includes the red laser beam, the green laser beam, and the blue laser beam, the incident light L₁ in the eye also includes a red laser beam, a green laser beam, and a blue laser beam, the three colors of laser beams may be blended to implement a color display effect. In this case, the virtual scene viewed by the human eye is a color.

In addition, after a part of the laser beam L₀ is diffracted, the part of the laser beam L₀ is propagated from the light exit area 3131 of the outer surface 313 to the outside of the combiner 31. In the figure, the part of light is marked as leaked light L₂. It may be understood that, when the processor 34 turns off the laser projector 32, that is, when the image projector 32 is in a turn-off state, the laser projector 32 does not project the laser beam L₀. In this case, no incident light L₁ in the eye enters the human eye for imaging, and no leaked light L₂ is propagated to the outside of the combiner 31.

The filter 33 is located on a side of the combiner 31 that faces away from the laser projector 32, that is, the filter 33 and the laser projector 32 are located on two opposite sides of the combiner 31. Specifically, two ends of the filter 33 may be mounted on the outer surface 313 of the combiner 31 by using sealant. There is an air gap between a middle part of the filter 33 and the outer surface 313 of the combiner 31, so that the laser beam L₀ can be totally reflected in the diffractive optical waveguide. A width d of the air gap is about 50 µm. It should be understood that, because thicknesses of the in-coupling grating 315 and the out-coupling grating 316 are at a nanometer level, the filter 33 is not in contact with the in-coupling grating 315 and the out-coupling grating 316.

The filter 33 covers the outer surface 313 of the combiner 31, to ensure appearance integrity and consistency of the augmented reality device 100, and improve appearance refinement of the augmented reality device 100. In other words, the filter 33 covers the outer surface of the in-coupling grating 315, the outer surface of the out-coupling grating 316, and the part that is on the outer surface of the diffractive optical waveguide 314 and that is not covered by the in-coupling grating 315 and the out-coupling grating 316. In this case, the filter 33 may serve as protective glass to protect the in-coupling grating 315 and the out-coupling grating 316.

It should be noted that, in another embodiment, the filter 33 may cover only the light exit area 3131 of the outer surface 313, that is, the filter 33 may cover only the outer surface of the out-coupling grating 316. It may be understood that, compared with a manner in which the filter 33 covers only the light exit area 3131 of the outer surface 313, the filter 33 covers the outer surface 313 of the combiner 31, so that a difficulty in a process of assembling the filter 33 is reduced, and there is no need to perform additional processing on the filter 33, to reduce a difficulty in processing the filter 33, and reduce production costs of the filter 33.

The blocking band of the filter 33 includes the band of the laser beam L₀ to block the laser beam L₀ emitted from the outer surface 313 of the combiner 31. It should be understood that the blocking band of the filter 33 means that the filter 33 may block light whose wavelength is in the blocking band, and does not block light whose wavelength is outside the blocking band. In other words, the light whose wavelength is in the blocking band cannot pass through the filter 33 to be propagated, and the light whose wavelength is outside the blocking band can pass through the filter 33 to be normally propagated. In other words, the filter 33 absorbs the light whose wavelength is in the blocking band, and does not absorb the light whose wavelength is outside the blocking band.

FIG. 6 is a curve chart of a transmittance curve of a filter 33 and a laser spectrum projected by a laser projector 32 in an augmented reality device 100 shown in FIG. 4.

In this embodiment, the blocking band of the filter 33 includes bands of the red laser beam, the green laser beam, and the blue laser beam in the laser beam L₀, to block light whose wavelength is in the bands of the red laser beam, the green laser beam, and the blue laser beam in the laser beam L₀. The filter 33 includes a red filter coating, a green filter coating, and a blue filter coating that are sequentially stacked, and the red filter coating, the green filter coating, and the blue filter coating may be stacked together by using sealant. The red filter coating is configured to block the red laser beam in the laser beam L₀, the green filter coating is configured to block the green laser beam in the laser beam L₀, and the blue filter coating is configured to block the blue laser beam in the laser beam L₀.

Specifically, the blocking band of the filter 33 includes three bands, and every two of the three bands of the blocking band are spaced apart. One band of the blocking band includes the band of the red laser beam in the laser beam L₀, one band of the blocking band includes the band of the green laser beam in the laser beam L₀, and one band of the blocking band includes the band of the blue laser beam in the laser beam L₀. Next, for ease of understanding, the three blocking bands are respectively named a first band, a second band, and a third band for description.

The first band includes the band of the red laser beam in the laser beam L₀, the second band includes the band of the green laser beam in the laser beam L₀, and one blocking band includes the band of the blue laser beam in the laser beam L₀. A center wavelength of the first band is the same as the peak wavelength of the red laser beam, a center wavelength of the second band is the same as the peak wavelength of the green laser beam, and a center wavelength of the third band is the same as the peak wavelength of the blue laser beam. In other words, the center wavelength of the first band is between 630 nm and 640 nm, the center wavelength of the second band is between 510 nm and 520 nm, and the center wavelength of the third band is between 445 nm and 455 nm, so that the filter can well block light whose wavelength is in the peak wavelengths of the red laser beam, the green laser beam, and the blue laser beam and that is in the laser beam emitted from the outer surface of the combiner. In addition, bandwidths of the first band, the second band, and the third band are between 15 nm and 20 nm, to ensure that the filter 33 can better block the red laser beam, the green laser beam, and the blue laser beam in the laser beam L₀.

It may be understood that, because the first band, the second band, and the third band are spaced apart, light whose wavelength is between the first band and the second band and light whose wavelength is between the second band and the third band can still pass through the filter 33 to be normally propagated, to reduce an impact caused by the filter 33 on light whose wavelength is among the bands of the red laser beam, the green laser beam, and the blue laser beam in the laser beam L₀, and reduce a color cast existing when the user views the external real scene. In addition, the bandwidths of the first band, the second band, and the third band are only between 15 nm and 20 nm, that is, the bandwidths of the first band, the second band, and the third band are small. Therefore, most of ambient light can pass through the filter 33 to be normally propagated. This also further reduces the color cast existing when the user views the external real scene.

In this embodiment, the processor 34 is located in the accommodation cavity 133 of the first border 131, and is connected to the laser projector 32. The processor 34 may include one or more processing units. The plurality of processing units may be, for example, an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. It should be understood that the processor 34 may be a central processing unit (central processing unit, CPU) of the augmented reality device 100, or may be another processor of the augmented reality device 100.

When the processor 34 turns on the laser projector 32, that is, when the laser projector 32 is in a turn-on state, the filter 33 blocks the laser beam L₀ emitted from the outer surface 313 of the combiner 31. Specifically, after the laser beam L₀ projected by the laser projector 32 enters the combiner 31 through the light entrance area 3121 of the inner surface 312, the incident light L₁ is emitted from the light exit area 3121 of the inner surface 312 into the human eye for imaging, and the leaked light L₂ is emitted from the light exit area 3131 of the outer surface 313 to the filter 33. Because the blocking band of the filter 33 includes the band of the laser beam L₀, the filter 33 blocks the leaked light L₂. This is equivalent to absorbing the leaked light L₂ by the filter 33, to prevent the leaked light L₂ emitted from the outer surface 313 of the combiner 31 from passing through the active filter 33 and being emitted into an external environment, and prevent the leaked light L₂ that carries the digital content from being leaked. This may improve privacy of the user and sociality of the augmented reality device 100, and may further prevent the leaked light L₂ that is leaked from forming a small display window on a surface of the augmented reality device 100, to improve appearance refinement existing when the user uses the augmented reality device 100.

In addition, after passing through the filter 33, ambient light L_{c} whose wavelength is outside the blocking band enters the combiner 31 through the outer surface 313 of the combiner 31, and is emitted from the inner surface 312 of the combiner 31. Because the blocking band of the filter 33 is narrow, most of the ambient light L_{c} may pass through the filter 33 to enter the combiner 31, and is propagated from the inner surface 312 of the combiner 31 to the direction of the human eye, to enter the human eye for imaging. In other words, the human eye may view the external real scene through the filter 33 and the combiner 31.

In addition, when the processor 34 turns off the laser projector 32, that is, when the laser projector 32 is in a turn-off state, the laser projector 32 does not project the laser beam L₀ that carries the digital content, so that no incident light L₁ in the eye is incident to the human eye, no leaked light L₂ is leaked out of the augmented reality device 100, and only the ambient light L_{c} whose wavelength is outside the blocking band enters the human eye. In other words, the human eye can only view the external real scene.

In the augmented reality device 100 shown in this embodiment, the laser projector 32 is used to emit the red laser beam, the green laser beam, and the blue laser beam that have narrow bands, and the filter 33 whose blocking band includes the bands of the red laser beam, the green laser beam, and the blue laser beam is mounted on the outer surface 313 of the combiner 31, so that the laser beam leaked from the combiner 31 can be blocked when the transmittance of the augmented reality device 100 is ensured. This improves privacy and sociality of the augmented reality device 100, and further improves appearance refinement existing when the user uses the augmented reality device 100.

It may be understood that, in another embodiment, when the laser projector 32 emits only one color of laser beam such as the red laser beam, the filter whose blocking band includes only the band of the red laser beam may be mounted on the outer surface of the combiner 31. This is not specifically limited in this application.

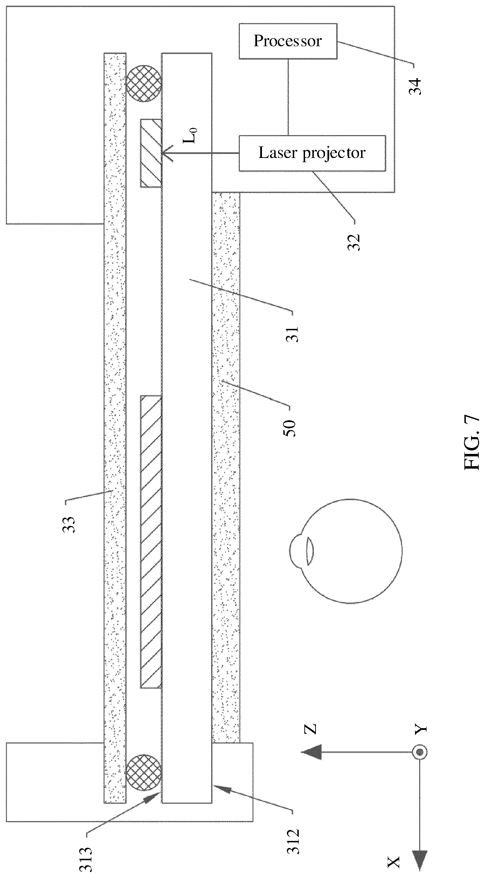

FIG. 7 is a schematic diagram of an enlarged structure of an area A in the structure shown in FIG. 3 in another embodiment.

A difference between the augmented reality device 100 shown in this embodiment and the foregoing first augmented reality device 100 lies in that the augmented reality device 100 further includes a zoom device 50. The zoom device 50 is mounted on the inner surface 312 of the combiner 31, and covers the inner surface 312 of the combiner 31. In other words, the zoom device 50 is located on a side of the combiner 31 that is close to the human eye, to correct eyesight of the user. When the user has an eyesight problem such as nearsightedness, farsightedness, or astigmatism, the zoom device 50 may correct a refractive error of the user when the user views the virtual scene that carries the digital content or the external real scene, to improve clarity existing when the user views the virtual scene or the external real scene, and improve user experience of using the augmented reality device 100. The zoom device 50 may be a device that can implement zooming, for example, a liquid crystal lens, a liquid lens, an Alvarez lens, or a mechanical zoom lens. It should be understood that the zoom device 50 may be an optical device with fixed focal power, for example, a lens with a degree, or may be an optical device that has adjustable focal power and that is coupled to the processor 34. When using the augmented reality device 100, the user may adjust focal power of the zoom device 50 based on a diopter of the user, so that the focal power matches the eyesight of the user, to improve adaptability of the augmented reality device 100, and improve use flexibility of the augmented reality device 100.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An augmented reality device, comprising a frame, a combiner, a laser projector, and a filter, wherein
the combiner is mounted on the frame, and the combiner comprises an inner surface and an outer surface that are opposite to each other;
the laser projector is mounted on the frame, and the laser projector is configured to emit a laser beam;
the filter is mounted on the outer surface of the combiner, and a blocking band of the filter comprises a band of the laser beam;
after the laser beam enters the combiner, a part of the laser beam is emitted from the inner surface of the combiner, a part of the laser beam is emitted from the outer surface of the combiner, and the filter blocks the laser beam emitted from the outer surface of the combiner; and
after a part of ambient light whose wavelength is outside the blocking band passes through the filter, the part of ambient light enters the combiner through the outer surface of the combiner, and is emitted from the inner surface of the combiner.

2. The augmented reality device according to claim 1, wherein the filter covers the outer surface of the combiner.

3. The augmented reality device according to claim 1 or 2, wherein the laser projector is configured to emit a red laser beam, a green laser beam, and a blue laser beam, and the blocking band of the filter comprises bands of the red laser beam, the green laser beam, and the blue laser beam.

4. The augmented reality device according to claim 3, wherein the blocking band comprises a first band, a second band, and a third band, and every two of the first band, the second band, and the third band are spaced apart; and
the first band comprises the band of the red laser beam, the second band comprises the band of the green laser beam, and the third band comprises the band of the blue laser beam.

5. The augmented reality device according to claim 4, wherein a center wavelength of the first band is the same as a peak wavelength of the red laser beam, a center wavelength of the second band is the same as a peak wavelength of the green laser beam, and a center wavelength of the third band is the same as a peak wavelength of the blue laser beam.

6. The augmented reality device according to claim 4 or 5, wherein bandwidths of the red laser beam, the green laser beam, and the blue laser beam are between 5 nm and 8 nm, and bandwidths of the first band, the second band, and the third band are between 15 nm and 20 nm.

7. The augmented reality device according to any one of claims 3 to 6, wherein the filter comprises a red filter coating, a green filter coating, and a blue filter coating that are stacked, the red filter coating is configured to filter the red laser beam, the green filter coating is configured to filter the green laser beam, and the blue filter coating is configured to filter the blue laser beam.

8. The augmented reality device according to any one of claims 1 to 7, wherein the augmented reality device comprises two augmented reality components, the two augmented reality components are spaced apart on the frame, each augmented reality component comprises the combiner, the laser projector, and the filter, and the combiners of the two augmented reality components are disposed side by side.

9. The augmented reality device according to claim 8, wherein the frame comprises a rim and a leg connected to the rim, the combiners of the two augmented reality components are spaced apart on the rim, and the laser projector is accommodated inside the rim or the leg.

10. The augmented reality device according to any one of claims 1 to 9, wherein the augmented reality device further comprises a zoom device, and the zoom device is mounted on the inner surface of the combiner.

11. The augmented reality device according to any one of claims 1 to 10, wherein the combiner comprises a diffractive optical waveguide, an in-coupling grating, and an out-coupling grating, the in-coupling grating and the out-coupling grating are blazed gratings, the in-coupling grating and the out-coupling grating are spaced apart on an outer surface of the diffractive optical waveguide, and the in-coupling grating is opposite to the laser projector.
